# EUROPEAN PATENT APPLICATION

(11) **EP 1 705 581 A1**
(43) Date of publication of application: **27.09.2006**
(21) Application number: 05251828.9
(22) Date of filing: 24.03.2005
(51) Int. Cl.: G06F 17/30, G06F 17/27

(54) **MPV file parsing method and apparatus, and storage medium therefor**

(30) Priority: 02.04.2004 US 558549 P; 25.08.2004 KR 20040067093
(71) Applicant: SAMSUNG ELECTRONICS CO., LTD., Suwon-si, Gyeonggi-do (KR)
(72) Inventor: Shin, Seong-kook, Seoul (KR); Kim, Young-yoon, 108-603 1-cha Hyundai Apt., Seoul (KR); Kim, Du-il, 108-1403 Dongsuwon LG Village 1-cha, Suwon-si, Gyeonggi-do (KR); Ahn, Jin-yong, Suwon-si, Gyeonggi-do (KR); Kim, Hee-yeon, Suwon-si, Gyeonggi-do (KR)
(74) Representative: Waddington, Richard

(57) **Abstract**

A method and apparatus are provided for parsing a MultiPhotoVideo or MusicPhotoVideo (MPV) file (101) in a multimedia application environment, and a storage medium (100) having recorded thereon a computer readable program for performing the method. The method includes: detecting assets (307 - 309) and/or elements and/or metadata (302) included in an MPV file (101); forming tree-based data, which has a tree-like structure, corresponding to the MPV file (101) based on correlations between the detected assets (307 - 309) and/or elements and/or metadata (302); storing the formed tree-based data; and parsing the MPV file (101) using the stored tree-based data. Accordingly, even if the MPV file (101) has a complicated format, an MPV parser (113) can easily parse the MPV file (103).

## Description

The present invention relates to a method and apparatus for parsing a MultiPhotoVideo or MusicPhotoVideo (MPV) file in a multimedia application environment, and a storage medium having recorded thereon a computer readable program for performing the method.

In order to reinforce interoperability between multimedia content reproducing devices, such as personal computers (PCs), and multimedia content creating devices, standardization of an MPV specification has been proposed by the Optical Storage Technology Association (OSTA) and the International Imaging Industry Association (I3A).

The aim of the MPV specification is to allow multimedia data, such as digital photos, video, audio, text, and documents, to be easily managed, reproduced, and exchanged in Consumer Electronics (CE) devices and Information Technology (IT) devices.

The MPV specification is defined as an MPV core and profiles using the MPV core. The MPV core includes the following elements: a collection, metadata, and an identifier. The collection includes the following elements: a manifest, an album, an asset list (AssetList), and marked assets (MarkedAssets). The manifest is obtained by grouping all of MPV elements to process and reproduce content, such as digital photos, video, and audio, stored in a storage medium or a storage device, such as an optical disc, a memory card, or a hard disc, or exchanged through an Internet protocol. The manifest is defined as an independent extensible Markup Language (XML) document. The metadata follows an XML format and can use a last uniform resource locator (LastURL), an instance identification (InstanceID), a document identification (DocumentID), and a content identification (ContentID) for discrimination. Also, in the profiles, a basic profile, a presentation profile, and a music profile are defined.

In this manner, the MPV specification considers a variety of creatable multimedia contents for interoperability between a plurality of multimedia content reproducing devices and a plurality of multimedia content creating devices. Therefore, MPV files can have a plurality of formats based on specifications of multimedia content creating devices. That is, an MPV file can have a simple format or a complicated format for inside referring to each other based on content.

Therefore, a multimedia content reproducing device should parse the MPV file in various terms. That is, the multimedia content reproducing device should easily parse the number of assets included in the MPV file, types of the included assets, and types of included metadata regardless of formats of the MPV file.

According to an aspect of the present there is invention provided a MultiPhotoVideo or MusicPhotoVideo (MPV) file parsing method and apparatus that easily enables parsing of an MPV file based on a tree-like structure in a multimedia application environment, and a storage medium having recorded thereon a computer readable program for performing the method.

According to the present invention there is provided an apparatus and method as set forth in the appended claims. Preferred features of the invention will be apparent from the dependent claims, and the description which follows.

According to an aspect of the present invention, there is provided an MPV file parsing method comprising: detecting at least one of assets, elements and metadata included in an MPV file; forming tree-based data, which has a tree-like structure, corresponding to the MPV file based on correlations between the at least one of assets, elements and metadata which are detected; storing the tree-based data; and parsing the MPV file using the stored tree-based data.

In the detecting, the at least one of assets, elements and metadata may be detected from the MPV file based on XML.

In the forming of the tree-based data, the tree-based data may be formed on the basis of correlations between at least one asset, element and metadata detected in the MPV file and at least one of assets, elements and metadata which were detected previously.

According to another aspect of the present invention, there is provided an MPV file parsing apparatus comprising: an XML parser which parses an MPV file based on XML, detects at least one of assets, elements and metadata included in the MPV file, and forms tree-based data, which has a tree-like structure, corresponding to the MPV file based on correlations between the at least one of assets, elements and metadata which are detected; a storage unit which stores the tree-based data formed by the XML parser; and an MPV parser which parses the MPV file based on the tree-based data stored in the storage unit.

Further, the XML parser may define a location of at least one of an asset, an element and metadata which is detected in the tree-like structure based on correlations between the at least one of an asset, an element and metadata and at least one of assets, elements and metadata which were detected previously.

According to another aspect of the present invention, there is provided a storage medium having recorded thereon a computer readable program for performing an MPV file parsing method in a multimedia application environment, the MPV file parsing method comprising: detecting at least one of assets, elements and metadata included in an MPV file; forming tree-based data, which has a tree-like structure, corresponding to the MPV file based on correlations between the at least one of assets, elements and metadata which are detected; storing the tree-based data; and parsing the MPV file using the stored tree-based data.

For a better understanding of the invention, and to show how embodiments of the same may be carried into effect, reference will now be made, by way of example, to the accompanying diagrammatic drawings in which:
FIG.1 is a block diagram of a multimedia content reproducing device having an MPV file parsing apparatus according to an exemplary embodiment of the present invention;
FIG. 2 is an example of a simple MPV file;
FIG. 3 is a tree-like structure corresponding to the MPV file shown in FIG. 2 formed by an XML parser shown in FIG. 1;
FIG. 4 is an example of a simple MPV file having metadata;
FIG. 5 is a tree-like structure corresponding to the MPV file shown in FIG. 4 formed by the XML parser shown in FIG. 1; .
FIG. 6 is an example of an MPV file having asset of <mpv:StillMultishotSequence>;
FIG. 7 is a tree-like structure corresponding to the MPV file shown in FIG. 6 formed by the XML parser shown in FIG. 1;
FIG. 8 is an example of an MPV file having asset of <mpv:StillWithAudio>;
FIG. 9 is a tree-like structure corresponding to the MPV file shown in FIG. 8 formed by the XML parser shown in FIG. 1;
FIG. 10 is an example of an MPV file having asset of <mpv:AudioWithStill>;
FIG. 11 is a tree-like structure corresponding to the MPV file shown in FIG. 10 formed by the XML parser shown in FIG. 1;
FIG. 12 is an example of an MPV file having asset of <mpv: Seq>;
FIG. 13 is a tree-like structure corresponding to the MPV file shown in FIG. 12 formed by the XML parser shown in FIG. 1; and
FIG.14 is a flowchart illustrating an MPV file parsing method according to an exemplary embodiment of the present invention.

Hereinafter, exemplary embodiments of the present invention will now be described more fully with reference to the accompanying drawings.

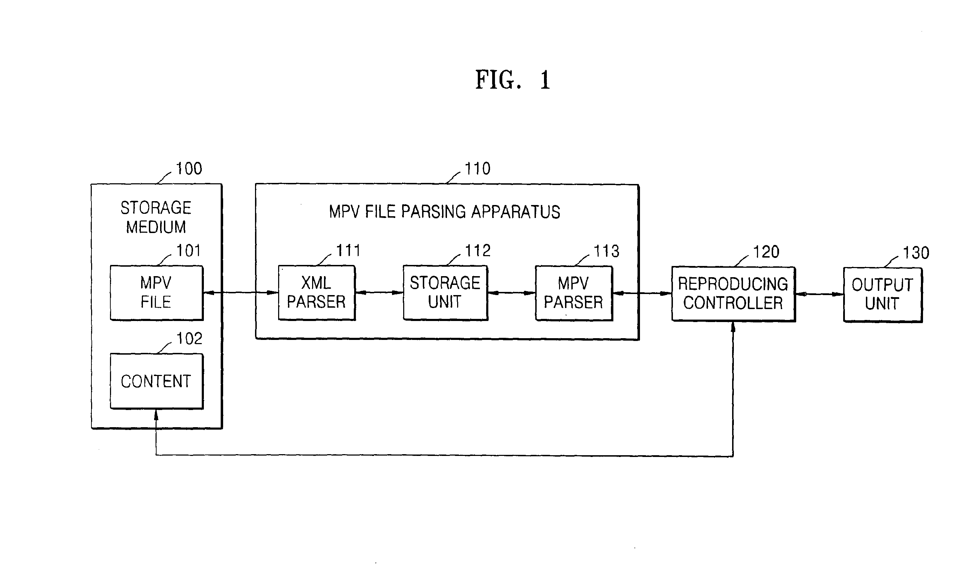

FIG.1 is a block diagram of a multimedia content reproducing device having an MPV file parsing apparatus 110 according to an exemplary embodiment of the present invention. The multimedia content reproducing device shown in FIG. 1 may be a CE device, such as a DVD player, a DVD recorder, or an MP3 player, or an IT device such as a PC.

Referring to FIG. 1, the multimedia content reproducing device includes a storage medium 100, the MPV file parsing apparatus 110, a reproducing controller 120, and an output unit 130.

The storage medium 100 stores an MPV file 101, which is parsed by the MPV file parsing apparatus 110, and content 102, which is referred by the MPV file 101 and reproduced by the reproducing controller 120. The content 102 may be multimedia content. The storage medium 100 may be a memory, a memory stick, an optical disc, or a hard disc.

The MPV file 101 can have a simple format having a simple asset or a complicated format having a composite asset. The simple asset may be <mpv:Still>, <mpv:Video>, <mpv:Audio>, or <mpv:ManifestLink>. The simple asset generally has actual media data for providing to an end user. The composite asset may be <mpv:StillMultiShotSequence>, <mpv:StillPanoramaSequence>, <mpv:StillWithAudio>, <mpv: AudioWithStill>, <mpv:Seq>, or <mpv:Par>. The composite asset has at least one reference to other assets and does not have actual media data.

The MPV file parsing apparatus 110 reads the MPV file 101 from the storage medium 100, parses various kinds of assets and metadata included in the MPV file 101, and transmits a reproducing control signal that enables reproduction of the content 102 stored in the storage medium 100 to the reproducing controller 120.

In order to provide these functions, the MPV file parsing apparatus 110 includes an XML parser 111, a storage unit 112, and an MPV parser 113.

When the XML parser 111 receives the MPV file 101 read from the storage medium 100, the XML parser 111 sequentially parses the MPV file 101 based on the XML, and whenever an asset, an element, or metadata is detected, the XML parser 111 defines a correlation between the detected asset, element, or metadata and a previously detected asset, element, or metadata and forms tree-based data having a tree-like structure corresponding to the MPV file 101.

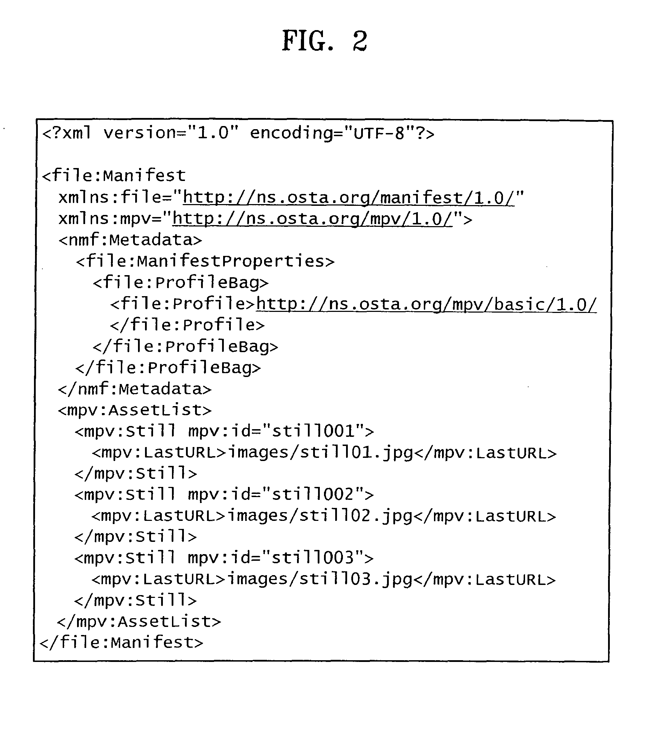

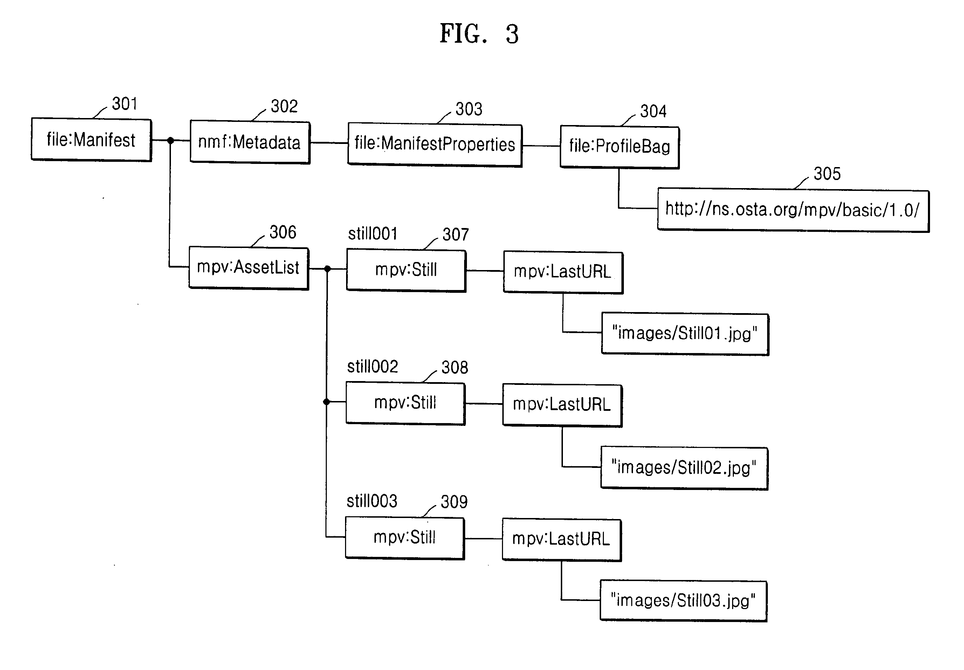

For example, when the MPV file 101 has three assets as shown in FIG. 2, types of all assets are <mpv:Still>, and the assets are XML-based documents of the simple format, which do not have metadata information except LastURL, since <nmf:Metadata> 302 is detected after Manifest is detected, the XML parser 111 places <nmf:Metadata> 302 in a lower layer of <file:Manifest> 301 in the highest layer, <file:ManifestProperties> 303 in a lower layer of <nmf:Metadata> 302, <file:ProfileBag> 304 in a lower layer of <file:ManifestProperties> 303, and <http://ns.osta.org/mpv/basic/1.0/> 305, which is the metadata, in a lower layer of <file:ProfileBag> 304 as shown in FIG. 3.

Also, since <mpv:AssetList> 306 is detected in the same layer of <nmf:Metadata> 302, the XML parser 111 forms tree-based data having a tree-like structure corresponding to the MPV file 101 shown in FIG. 2 by placing <mpv:AssetList> 306 in the same layer of <nmf:Metadata> 302 and simultaneously a lower layer of <file:Manifest> 301, placing <mpv:Still> assets 307, 308, and 309, which are detected in a lower layer of <mpv:AssetList> 306, in the lower layer of <mpv:AssetList> 306, and placing LastURLs, which are detected in a lower layer of <mpv:Still> assets 307, 308, and 309, in the lower layer of <mpv:Still> assets 307, 308, and 309, respectively, as shown in FIG. 3.

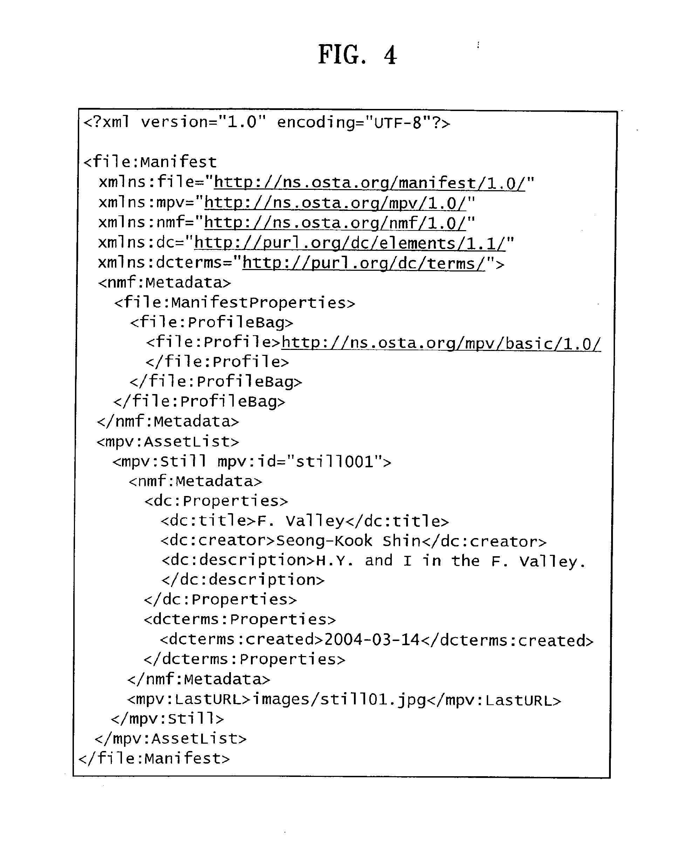

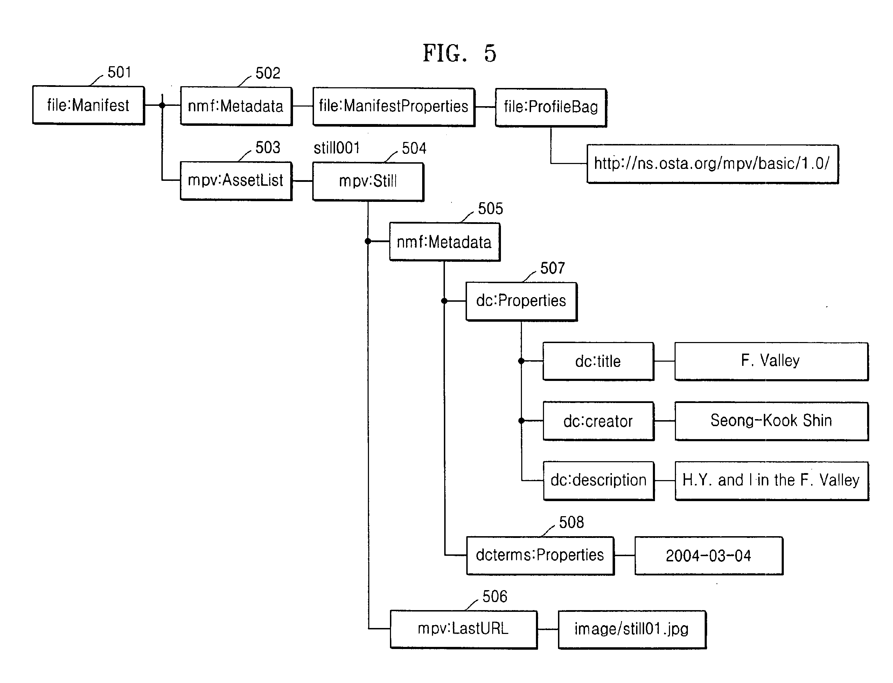

When the MPV file 101 has one asset as shown in FIG. 4, a type of the asset is <mpv:Still>, and the asset has a plurality of metadata, the XML parser 111 parses the MPV file 101 as described above and forms tree-based data having a tree-like structure shown in FIG. 5 based on the parsing results.

In the tree-like structure shown in FIG. 5, <file:Manifest> 501 is in the highest layer, <nmf:Metadata> 502 and <mpv:AssetList> 503 are located in a lower layer of <file:Manifest> 501, <mpv:Still> 504, whose ID is "sti11001," is located in a lower layer of <mpv:AssetList> 503, <nmf:Metadata> 505 and <mpv:LastURL> 506 are located in a lower layer of <mpv:Still> 504, and <dc:Properties> 507 and <dcterms:Properties> 508 are located in a lower layer of <nmf:Metadata> 505.

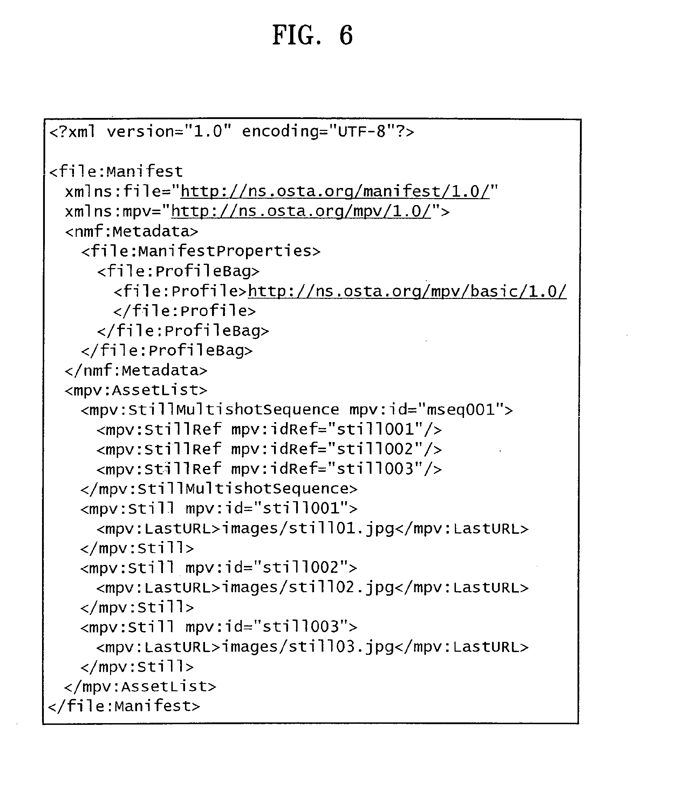

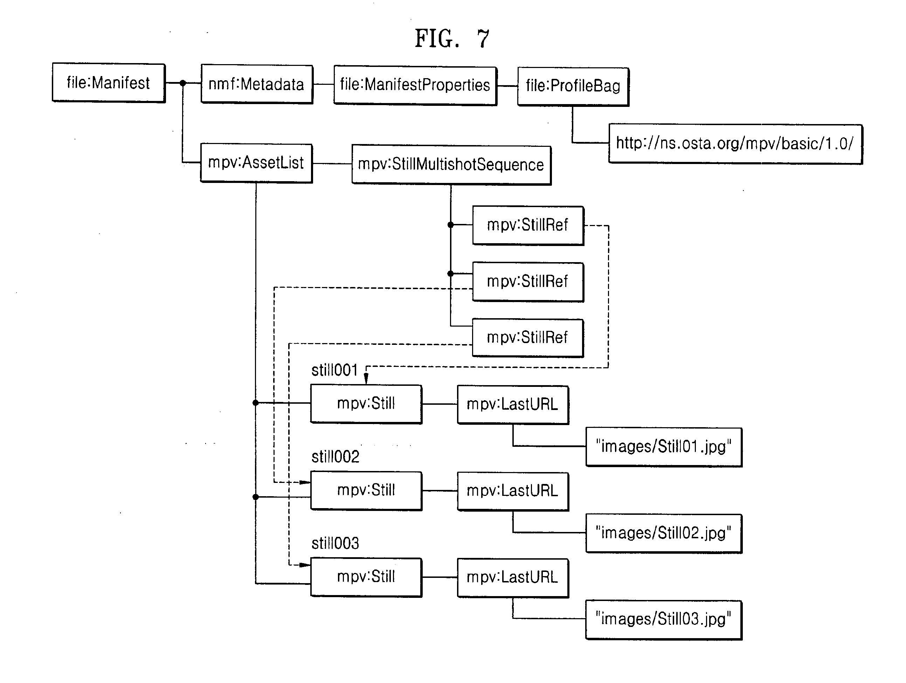

When the MPV file 101 is a composite asset corresponding to <mpv:StillMultiShotSequence> as shown in FIG. 6, the XML parser 111 parses the MPV file 101 and forms tree-based data having a tree-like structure shown in FIG. 7.

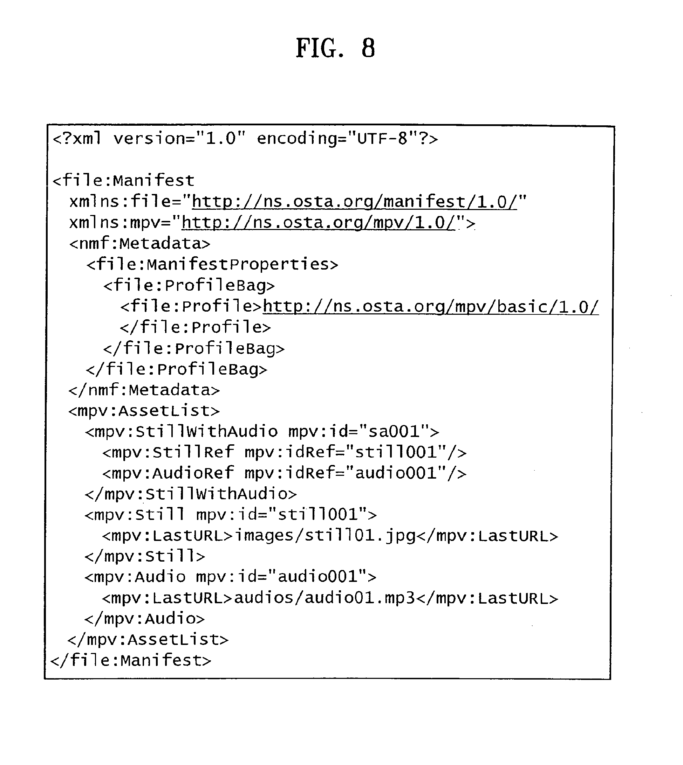

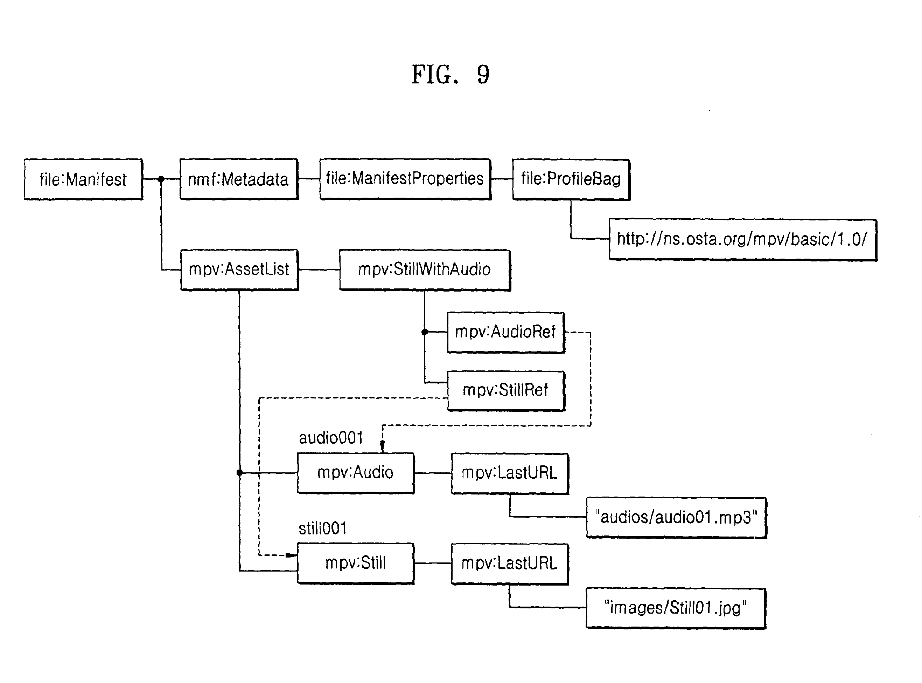

When the MPV file 101 has one <mpv:StillWithAudio> and two referred assets <mpv:Still> and <mpv:Audio> as shown in FIG. 8, the XML parser 111 forms tree-based data having a tree-like structure corresponding to the MPV file 101 as shown in FIG. 9.

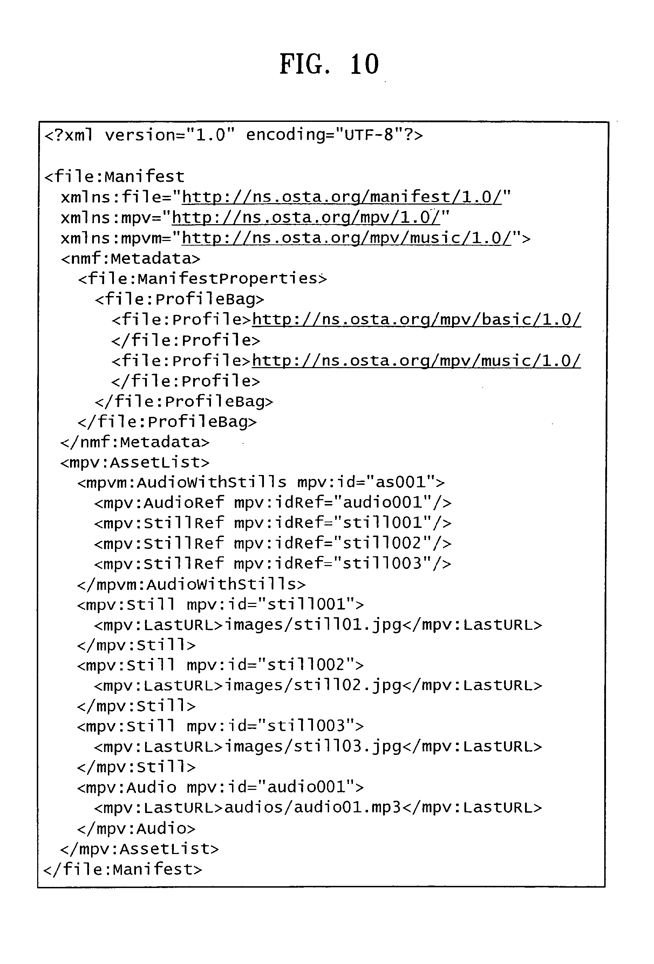

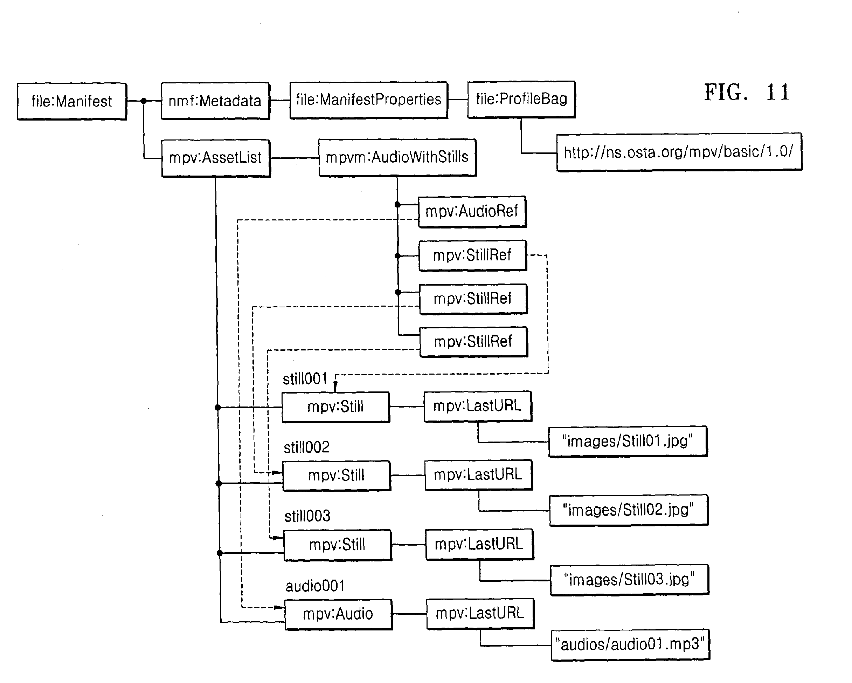

When the MPV file 101 includes an asset of <mpvm:AudioWithStills> in which one XML namespace prefix is "mpvm" as shown in FIG. 10, the XML parser 111 forms tree-based data having a tree-like structure corresponding to the MPV file 101 as shown in FIG. 11.

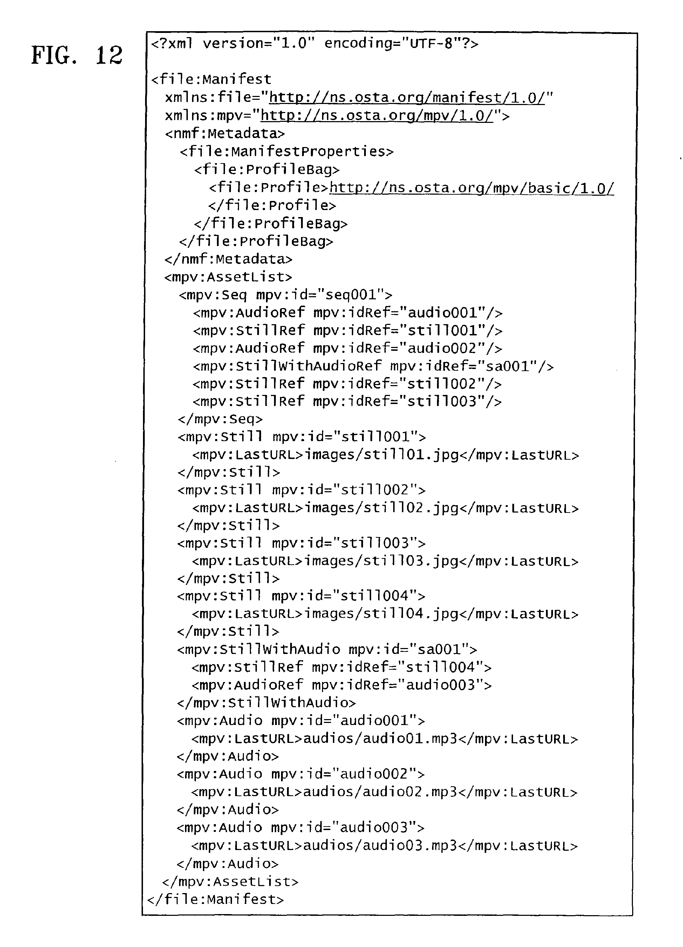

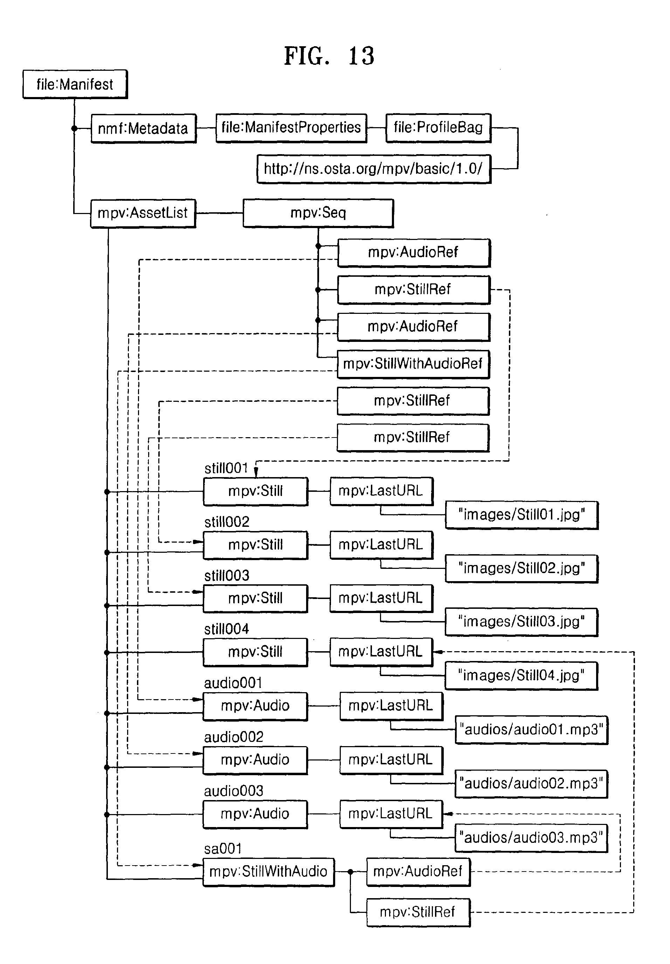

When the MPV file 101 is a composite asset corresponding to <mpv:Seq> as shown in FIG. 12, the XML parser 111 forms tree-based data having a tree-like structure corresponding to the MPV file 101 as shown in FIG. 13.

The formed tree-based data having a tree-like structure corresponding to the MPV file 101 is stored in the storage unit 112.

The MPV parser 113 obtains a parsing result of the MPV file 101 by parsing the tree-based data stored in the storage unit 112 and transmits a reproducing control signal based on the obtained result to the reproducing controller 120.

If the reproducing controller 120 receives the reproducing control signal from the MPV parser 113, the reproducing controller 120 controls the multimedia content reproducing device so that the content 102 stored in the storage medium 100 can be reproduced on the basis of the received reproducing control signal.

The output unit 130 outputs content corresponding to images, such as digital photos, and/or content corresponding to an audio signal and/or documents provided from the reproducing controller 120.

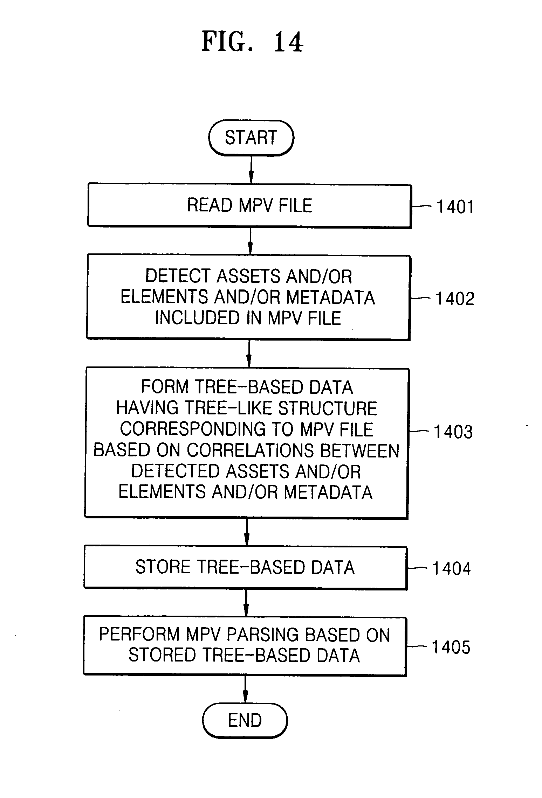

FIG.14 is a flowchart illustrating an MPV file parsing method according to an exemplary embodiment of the present invention.

Referring to FIG. 14, an MPV file 101 stored in the storage medium 100 is read in operation 1401. The MPV file 101 can have various formats shown in FIGS. 2, 4, 6, 8, 10, and 12. Assets and/or elements and/or metadata included in the MPV file 101 are detected on the basis of the XML in read order in operation 1402.

Tree-based data having a tree-like structure corresponding to the MPV file 101 is formed on the basis of correlations between the detected assets and/or elements and/or metadata in operation 1403. The formed tree-based data is stored in operation 1404. The MPV file 101 is parsed on the basis of the stored tree-based data in operation 1405.

When the tree-based data having a tree-like structure corresponding to the MPV file 101 is formed, whenever an asset and/or an element and/or metadata included in the MPV file 101 are detected, locations of the detected asset and/or element and/or metadata in the tree-like structure can be defined on the basis of correlations between the detected asset and/or element and/or metadata and previously detected assets and/or elements and/or metadata.

The method according to aspects of the present invention may be embodied in a general-purpose computer by running a program from a computer-readable medium, including but not limited to storage media such as magnetic storage media (ROMs, RAMs, floppy disks, magnetic tapes, etc.), optically readable media (CD-ROMs, DVDs, etc.), and carrier waves (transmission over the internet).

Aspects of the present invention may be embodied as a computer-readable program code unit recorded on a computer-readable medium, and the computer-readable program code can be executed in a distributed manner in a computer network. The functional programs, codes and code segments for embodying the present invention may be easily deducted by programmers in the art to which the present invention belongs.

As described above, according to exemplary embodiments of the present invention, an XML parser parses an MPV file, forms tree-based data having a tree-like structure corresponding to the MPV file, and stores the formed tree-based data. Accordingly, an MPV parser parses the tree-based MPV file according to demands. Therefore, even if the MPV file has a complicated format, the MPV parser can easily parse the MPV file. Accordingly, a load of the MPV parser due to the MPV file parsing can be reduced.

Also, navigation of each element included in the MPV file can be easily performed by performing the MPV file parsing based on the tree-based data.

In addition, the XML parser can be prevented from repeatedly parsing the MPV file by saving a result obtained by parsing the MPV file using the XML parser and by using the saved result.

While aspects of this invention has been particularly shown and described with reference to exemplary embodiments thereof, it will be understood by those skilled in the art that various changes in form and details may be made therein without departing from the scope of the invention as defined by the appended claims. Therefore, the scope of the invention is defined not by the detailed description of the exemplary embodiments but by the appended claims, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A MultiPhotoVideo or MusicPhotoVideo (MPV) file parsing method comprising:
detecting at least one of assets (307 - 309), elements and metadata (302) included in an MPV file;
forming tree-based data, which has a tree-like structure, corresponding to the MPV file based on correlations between the at least one of assets (307 - 309), elements and metadata (302) which are detected;
storing the tree-based data; and
parsing the MPV file using the stored tree-based data.

2. The method of claim 1, wherein in the detecting, the at least one of assets (307 - 309), elements and metadata (302) are detected in the MPV file based on extensible Markup Language (XML).

3. The method of claim 1 or 2, wherein in the forming of the tree-based data, the tree-based data is formed on the basis of correlations between at least one asset, element and metadata (302) detected in the MPV file and at least one of assets (307 - 309), elements and metadata (302) which were detected previously.

4. A MultiPhotoVideo or MusicPhotoVideo (MPV) file parsing apparatus comprising:
an XML parser (111) which parses an MPV file (101) based on XML, detects at least one of assets (307 - 309), elements and metadata (302) included in the MPV file (101), and forms tree-based data, which has a tree-like structure, corresponding to the MPV file (101) based on correlations between the at least one of assets(307 - 309), elements and metadata (302) which are detected;
a storage unit (112) which stores the tree-based data formed by the XML parser (111); and
an MPV parser (113) which parses the MPV file (101) based on the tree-based data stored in the storage unit (112) .

5. The apparatus of claim 4, wherein the XML parser (111) defines a location of at least one of an asset (307 - 309), an element and metadata (302) which is detected in the tree-like structure based on correlations between the at least one of an asset (307 - 309), an element and metadata (302) and at least one of assets (307 - 309), elements and metadata (302) which were detected previously.

6. A storage medium (100) having recorded thereon a computer readable program for performing a MultiPhotoVideo or MusicPhotoVideo (MPV) file parsing method in a multimedia application environment, the MPV file parsing method comprising:
detecting at least one of assets (307 - 309), elements and metadata (302) included in an MPV file (101);
forming tree-based data, which has a tree-like structure, corresponding to the MPV file (101) based on correlations between the at least one of assets (307 - 309), elements and metadata (302) which are detected;
storing the tree-based data; and
parsing the MPV file (101) using the stored tree-based data.
